# EUROPEAN PATENT SPECIFICATION

(11) **EP 1 100 848 B1**
(45) Date of publication and mention of the grant of the patent: **23.10.2002**
(21) Application number: 99931402.4
(22) Date of filing: 28.07.1999
(51) Int. Cl.: C09B 67/00

(54) **AQUEOUS COMPOSITIONS OF REACTIVE DYES, THEIR PRODUCTION AND USE**
WÄSSRIGE REAKTIVFARBSTOFF-PREPARATE, DEREN HERSTELLUNG UND DEREN VERWENDUNG
COMPOSITIONS AQUEUSES DE COLORANTS REACTIFS, LEUR PRODUCTION ET LEUR UTILISATION

(30) Priority: 29.07.1998 EP 98810726
(43) Date of publication of application: 23.05.2001
(73) Proprietor: Clariant Finance (BVI) Limited, Road Town, Tortola (VG)
(72) Inventor: BREUNINGER, Hartmut, D-79400 Kandern (DE); GRIMM, Roland, CH-4416 Bubendorf (CH)
(74) Representative: D'haemer, Jan Constant
(86) International application number: IB9901339
(87) International publication number: WO00006653

(56) References cited:
- EP-A- 0 148 496
- DE-A- 4 419 533
- CHEMICAL ABSTRACTS, vol. 103, no. 14, 7 October 1985 (1985-10-07) Columbus, Ohio, US; abstract no. 106184, B.N. MEL'NIKOV ET AL.: "Role in intensifier melts in high-temperature dye-fixation" page 65; XP002092756 & KOLOR. ERT., vol. 26, no. 5-6, 1984, pages 175-184,
- PATENT ABSTRACTS OF JAPAN vol. 018, no. 328 (C-1215), 22 June 1994 (1994-06-22) -& JP 06 073320 A (MITSUBISHI KASEI CORP), 15 March 1994 (1994-03-15)
- PATENT ABSTRACTS OF JAPAN vol. 096, no. 002, 29 February 1996 (1996-02-29) -& JP 07 278478 A (MITSUBISHI CHEM CORP), 24 October 1995 (1995-10-24)
- DATABASE WPI Section Ch, Week 8401 Derwent Publications Ltd., London, GB; Class A82, AN 84-002976 XP002092757 & JP 58 198570 A (DAINIPPON INK & CHEM KK) , 18 November 1983 (1983-11-18)

## Description

For water-soluble reactive dyes it is often desirable - for greater ease of handling - to produce and supply them in the form of concentrated aqueous solutions. This presents the problem, however, that on prolonged storage, especially under fluctuating temperatures (for example, from -20 to +50°C), there may be severe deterioration in the physical and coloristic properties of the concentrated reactive-dye solutions - even if they contain corresponding additives such as e.g. solubilizers or protective colloids - e.g. as their viscosity may increase, precipitates may be formed, the pH may fall heavily as a result of hydrolysis, and/or the colour or coloristic properties (especially shade and/or colour yield) may be altered such that it is practically impossible to use them any more. A solubilizer which is popular per se for such dyes is unsubstituted urea, which is readily degradable in wastewater purification plants; however, concentrated reactive-dye compositions containing urea as a solubilizer have a particular propensity to suffer such destabilization phenomena.

EP-A-148496 describes reactive-dye solutions containing certain reactive dyes of the pyrimidine series and mixtures of unsubstituted urea and certain methyl-substituted urea compounds.

DE-C-3620308 describes liquid compositions of reactive dyes which contain specific polymeric carboxylic acids.

It has now been found that the aqueous, biuret-containing reactive-dye compositions defined below are surprisingly stable, even under severe temperature fluctuations, and substantially retain their physical and coloristic properties even on prolonged storage.

The invention concerns the defined, storable reactive-dye compositions, their production and their use.

The invention therefore firstly provides aqueous reactive-dye compositions (P) which are aqueous solutions of
(R) at least one reactive dye
   and optionally
(F) at least one formulating additive,
   which are characterized by a content of
(B) biuret.

The reactive dyes are a known category of dyes and are described in the technical literature; for example, they are defined in the Colour Index under the heading "Reactive Dyes" and are also enumerated in large numbers. Numerous reactive dyes are also obtainable commercially.

The reactive dyes (R) may contain any desired reactive groups, e.g. halogen-substituted heterocyclic groups (especially those of the halogentriazine or halogenpyrimidine series) or open-chain groups (especially β-sulphatoethylsulphonyl, β-sulphatoethylaminosulphonyl, β-sulphatopropionamido, β-chloroethylsulphonyl, vinylsulphonyl or acryloylaminosulphonyl), and also any desired chromophoric radicals (for example, those of the anthraquinone, phthalocyanine, triphendioxazine, azo or azomethine series, and also metal complexes of corresponding azo and/or azomethine dyes). Preferred reactive dyes (R) are those containing a halogen-substituted heterocycle as fibre-reactive radical, preferably a fluoro-, chloro- and/or bromo-substituted radical of the triazine or pyrimidine series (preferably a mono- or dichlorotriazine radical or a fluoro- and/or chloro-substituted pyrimidine radical) or a sulphatoethylsulphonyl radical.

The reactive dyes (R) which can be used are any which are soluble in water, in particular those containing at least one water-solubilizing group, for example at least one sulphonic acid or carboxylic acid group (preferably in salt form), at least one sulphonamide group, or in the case of metal complexes, a suitable counterion. The 'reactive dyes preferably contain one or more sulphonic acid groups in salt form. For salt formation or respectively as counterions, are suitable any desired cations as are suitable for water-soluble anionic dyes, especially alkali metal cations (lithium, sodium, potassium) and ammonium cations {e.g. unsubstituted ammonium, or ammonium substituted with low molecular aliphatic radicals, e.g. mono-, di- or tri-(C₁₋₂-alkyl)-ammonium, mono-, di- or tri-(C₂₋₃-hydroxyalkyl)-ammonium, mono-, di- or tri-[(C₁₋₂-alkoxy)-(C₂₋₃-alkyl)]-ammonium or morpholinium}. The dyes (R) advantageously contain at least two water-solubilizing groups in the molecule, especially in the chromophoric radical, of which advantageously at least one is a sulpho group. The solubility of the dyes (R) in water is advantageously at least 10 g/l, preferably at least 30 g/l, at room temperature (= 20°C) and at pH 7. The dyes (R) may be pure or respectively purified dyes, or also unpurified dyes e.g. still comprising by-products and/or extraneous electrolytes from their production, e.g. from any diazotization, coupling, metallization, dehydrohalogenation, saponification, reduction and/or oxidation reactions (e.g. alkali metal chlorides, sulphates, nitrates, acetates, salicylates); from an acidic pH adjustment with an acid, e.g. hydrochloric acid, and subsequent neutralization with sodium hydroxide or potassium hydroxide, or from a basic pH adjustment with sodium hydroxide or potassium hydroxide and subsequent neutralization with an acid, e.g. hydrochloric acid, by pH adjustment with a buffer (e.g. with sodium or potassium hydrogen phosphate or acetate) or/and salting out with sodium chloride or potassium chloride, a corresponding amount of salts, e.g. sodium chloride, potassium chloride or buffer salts, may occur in (R). Commercial dyes may optionally already include formulating additives, e.g. urea, solubilizers or surfactants, as defined below under (F1), (F2) and (F4) respectively.

The aqueous reactive-dye compositions (P) of the invention are characterized by the presence of (R) and (B) and may optionally contain further formulating additives (F).

The (R) content in the aqueous reactive-dye compositions (P) of the invention is advantageously in the range from 5 to 50 % by weight, preferably from 10 to 35 % by weight, wherein, depending on the concentration, on the salt-forming counterion and optionally kind and amount of solubilizer, especially as set out below under (F1) and/or (F2), (R) may be present as a true or also colloidal solution.

The (B) content in the aqueous reactive-dye compositions (P) of the invention is advantageously in the range from 0.1 to 5 % by weight, preferably from 0.5 to 2 % by weight.

Further formulating additives (F) which may be present in the compositions (P) of the invention are any desired formulating additives as are conventional per se, e.g. one or more of the following components:
(F1) urea
(F2) at least one non-ionogenic, basic or cationic solubilizer other than (F1),
(F3) at least one alkali metal salt of a mineral acid,
(F4) a surfactant system,
(F5) a defoamer
and (F6) a means of combating the harmful effect of microorganisms.

The compositions (P) of the invention may optionally contain urea (F1). The (F1) content of (P) is preferably ≤ 10 % by weight, more preferably ≤ 5 % by weight, e.g. in the range from 0.1 to 10 % by weight, advantageously from 0.1 to 5 % by weight, preferably from 0.5 to 5 % by weight, and, in particular, from 0.5 to 2 % by weight.

As solubilizers (F2) come into consideration products known per se, e.g. aliphatic nonionic oligohydroxy compounds [e.g. with 2 to 12, preferably 3 to 10, in particular 4 to 8 carbon atoms, e.g. glycerol, hexylene glycol or/and mono- or oligo-(C₂₋₄-alkylene) glycols] or also their mono-(C₁₋₄-alkyl) ethers, or, preferably, basic or cationic compounds, e.g. mono-, di- or tri-(C₂₋₃-hydroxyalkyl)-amine and mono-, di- or tri-[(C₁₋₂-alkoxy)-(C₂₋₃-alkyl)]-amine.

The proportion of (F2) in (P) may vary within a wide range. If (F2) is used the weight ratio of (F2) to (R) is e.g. in the range of from 0.5 to 5 parts by weight of (F2) per 100 parts by weight of (R). Preferably no (F2) is used with a dye of sufficiently high solubility, e.g. a dye containing on average more than one solubilizing substituent per optionally condensed benzenic ring (e.g. a naphthalene ring being thus calculated as two benzenic rings).

A component (F3) may optionally be present. Suitable alkali metal salts (F3) include in particular those which can be used, for example, as a blending agent to adjust the strength of the dye (R). Suitable (F3) include chlorides, sulphates and optionally phosphates, especially sodium chloride or sodium sulphate (Glauber's salt). If a salt (F3) is present in the composition (P), the (F3) content is, for example, in the range from 5 to 50 % by weight, preferably from 10 to 30 % by weight of (R). Preferably, no salts (F3) are added. In one particular embodiment of the invention the compositions (P) are substantially free from (F3) and are also, preferably, substantially free from any extraneous electrolytes, i.e. are also substantially salt-free, which, apart from refraining from an addition of (F3), can be achieved e.g. by membrane filtration of an aqueous (R) solution prior to the addition of (B) and optionally of one or more of the additives (F1), (F2), (F4), (F5) and (F6).

The compositions (P) may optionally contain a surfactant system (F4), such as a dispersant or wetting agent such as is occasionally used in dye compositions, e.g. a non-ionogenic or anionic dispersant or wetting agent (e.g. lignin sulphonates or condensation products of sulphonated naphthalenes and/or diphenyl ethers with formaldehyde), e.g. in an amount of from 10 to 80 % by weight of (R). In one preferred embodiment of the invention (P) contains no surfactant (F4).

The compositions (P) of the invention may optionally contain at least one additive (F5) or (F6).

Suitable defoamers (F5) include any desired conventional foam inhibitor products, which may comprise e.g. paraffins, mineral oils, silica, ethylene bis-fatty acid amides and/or silicones. Suitable products include e.g. commercial products, which may be employed in the concentrations recommended in each case, e.g. in the range from 0.01 to 2% by weight, preferably from 0.02 to 1 % by weight of (P).

(F6) is judiciously an inhibitor of bacterial growth or a biocide. Suitable products (F6) include before all fungicides and bactericides, e.g. commercial products which may be used in the concentrations recommended in each case, for example in the range of 0.001 to 1 % by weight, preferably from 0.005 to 0.5 % by weight of (P).

The compositions (P) of the invention can be produced very simply, in particular, by mixing a dye (R) or a dye mixture (R) in the presence of water with (B) and optionally (F), advantageously by mixing a dye or dye mixture (R), preferably as an aqueous solution (optionally purified, e.g. by membrane filtration), as an aqueous filter cake or as a dry dye, with the other components, in particular with an aqueous solution of (B) and optionally (F1) and (F2) and, if required, further water and optionally (F5) and/or (F6). (F3) and (F4) are advantageously not added, but may be present in a commercial formulation of (R). An adjustment in pH, for example, with a mineral acid, such as hydrochloric acid, or with an alkali metal hydroxide, may, if desired, be carried out before or after mixing the components.

The pH of the reactive dye compositions (P) of the invention is e.g. in the range from 4 to 9, and, depending on the reactive system, an optimum pH may be chosen; in particular for halogen-substituted reactive systems, especially halogen-substituted heterocycles, a pH in the range from advantageously 5.5 to 8.5, especially from 6.5 to 8, is preferred and for aliphatic reactive systems containing sulphate groups or unsaturated groups a pH in the range from advantageously 4 to 7, especially from 4.5 to 6, is preferred.

Apart from the components (R), (B) and optionally (F), the aqueous compositions (P) of the invention preferably contain no further additives, that is, they consist essentially of (R), (B) and water and optionally (F); of these compositions, preference is given to those containing as (F) one or more of the components (F1), (F2), (F5) and (F6) and optionally (F4), especially those containing as (F) one or more of components (F1), (F2), (F5) and (F6), and, before all, those containing as (F) one or more of the components (F1), (F5) and (F6).

The compositions (P) produced are in general readily pourable and fluid, display in general viscosity below 1000 cP and are highly stable to storage and transportation, even under frost or heat conditions, and can also be stored for prolonged periods (for example several weeks or even months) without substantial change or deterioration in their physical and coloristic properties; in particular, they are also highly resistant to temperature fluctuations e.g. in the temperature range from -20 to +50°C, the pH being essentially stable and no substantial or disturbing change in viscosity taking place, the viscosity remaining in particular below 1000 cP. Minor occasional fluctuations in the pH or viscosity of the aqueous compositions, may occur, but this does not substantially affect the coloristic properties.

The compositions (P) of the invention may be handled directly as produced and may be used in particular as dyes for those substrates and processes for which the respective reactive dyes (R) are usable. There may e.g. be dyed substrates of natural or synthetic polyamides (e.g. wool, silk, nylon 6, nylon 66), of polyurethanes and/or cellulosic substrates (e.g. cotton, hemp, linen, viscose, lyocell), especially textile material in any suitable processing form, for example as loose fibres, filaments, yarns, wovens, knits, nonwovens, ready-made or half ready-made goods. Also suitable are any desired conventionl dyeing processes, for example exhaust processes and impregnation processes (primarily padding, dipping and printing). Exhaust processes may be conducted using any desired conventional liquor-to-goods ratios (e.g. from 5:1 to 100:1) and temperatures (for example in the range from 40°C to boiling temperature, preferably from 60 to 98°C). For the dyeing of cellulosic fibre material the known salts (e.g. Glauber's salt or sodium chloride) may be added in appropriate concentrations, for example from 5 to 80 g/l, to the liquors, and following the desired dyeing time an alkali, for example sodium hydroxide and/or sodium carbonate, is advantageously added in order to fix the dye reactively, advantageously in the pH range from 9 to 13, preferably from 10 to 12. Exhaustion dyeing may then be completed by conventional soaping and/or washing and rinsing. Continuous impregnation processes for cellulosic substrates can be carried out, for example, with alkaline liquors, advantageously within the abovementioned pH ranges, it being advantageous to carry out impregnation without heating (for example at from 15 to 25°C, or also up to 40°C depending on the ambient climatic conditions) and to fix the impregnated goods either by cold dwelling or, after an intermediate drying, by treatment, for example, with steam or dry heat. Printing may also be carried out in conventional manner, for example in one phase or in two phases. If printing is done in one phase, the printing paste contains a suitable alkali, for example sodium bicarbonate or sodium carbonate, and fixing takes place advantageously by steaming or with dry heat in a manner analogous to that described above. If printing is done in two phases, the dye is applied in the first phase, this printing paste advantageously being neutral to weakly acidic (e.g. pH 4 to 7), and the alkali for fixation is applied in the second phase, after an intermediate drying, advantageously by means of a minimal add-on applicator, preferably such that the moisture content is ≤ 30 % of the dry weight of the substrate. Here again, fixing takes place judiciously by means of treatment with steam or dry heat, or also by leaving the goods to lie at room temperature. The dye-containing printing pastes may comprise suitable thickeners, e.g. alginates, carob gum ethers and/or polyacrylates. If desired, hydrotropic agents, principally urea, may be added to the printing pastes. The water content and thickener content of the printing pastes is advantageously chosen such that the viscosity is within the range from 1000 to 8000 cP, preferably from 2000 to 6000 cP, at room temperature (=20°C). If desired, the dyeings may further be aftertreated with a fixing agent, as described, for example, in EP 812949 A2, which is expressly incorporated herein by reference.

The compositions (P) of the invention are outstandingly suitable for all of these processes which are customary per se. E.g. even after a prolonged storage period it is still possible to prepare with them stock solutions e.g. with an (R) concentration of from 1 to 10 % by weight, the pH advantageously being neutral to weakly acidic (e.g. pH 5 to 7), and these stock solutions also being storable, i.e. they can be prepared for a particular dyeing operation and held in the dyehouse e.g. for a whole day in order to provide one day's requirement of stock liquor. The compositions of the invention are further also suitable for preparing jet printing inks.

In the following examples parts and percentages are by weight and the temperatures are stated in degrees Celsius.

### Example 1

16 parts of urea and 16 parts of biuret are dissolved in 230 parts of demineralized water and the pH of the solution is adjusted to 7.5-8.0 with 20 % strength sodium hydroxide solution. Then 1300 parts of a 17 % strength solution of the dye of the formula 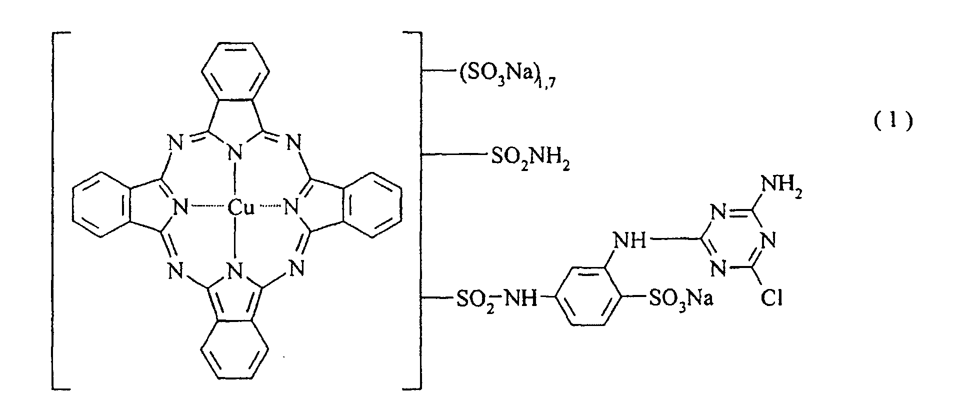 are stirred into this solution. The 17 % strength dye solution is the retentate obtained from membrane filtration as an aqueous solution of the filter cake from the production of the dye. The pH is held at from 7.5 to 8.0 using 20 % strength sodium hydroxide solution. After two hours of stirring, 4.0 parts of biocide (Acticid RS) are stirred in. The dye content of the composition is adjusted to 15.4 % pure dye by adding demineralized water. The resulting composition is notable for its storage stability, even under conditions of frost or heat.

### Example 2

5 parts of urea, 5 parts of biuret and 3 parts of triethanolamine hydrochloride are dissolved in 300 parts of demineralized water. Then 166 parts of a commercial dry formulation of the dye of the formula 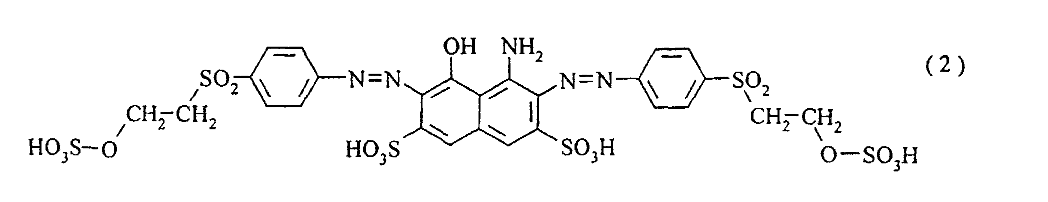 [containing about 60 % of dye of the formula (2) as sodium salt, 35 % lignin sulphonate and 5 % by-products] are stirred into this solution using a toothed disc. pH 4.5-5.0. After one hour of stirring, 0.5 part of biocide (Acticid RS) is stirred in. The dye content of the composition is adjusted to 20 % pure dye by adding demineralized water. The resulting composition is notable for its storage stability even under conditions of frost or heat.

### Example 3

2 parts of biuret and 0.3 part of biocide (Proxel GXL) are stirred into 182 parts of an aqueous dye solution purified by membrane filtration and containing 20.6 parts of the dye of the formula 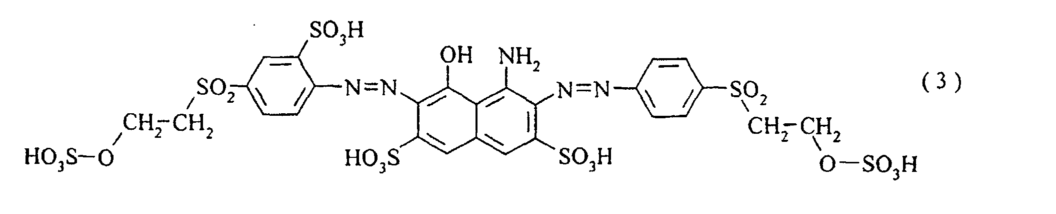 in sodium salt form and 7 parts of urea. The dye content of the composition is adjusted to 10% pure dye by adding demineralized water. The pH is 5. The resulting composition is notable for its storage stability even under conditions of frost or heat.

### Application Example 1

A printing paste of the following composition

| | |
|---|---|
| liquid dye composition of Example 1, 2 or 3 | 10 parts |
| 5 % strength aqueous sodium alginate thickener | 50 parts |
| sodium hydrogen carbonate | 2 parts |
| urea | 5 parts |
| water water | 33 parts |
| | 100 parts |

is used to print a cotton cretonne and the print is then steamed at 102°C for 10 minutes. Subsequently, it is rinsed cold and hot and soaped off at the boil. Finally, it is rinsed with an anionic detergent and dried. A turquoise, black or navy print is obtained. The print obtained with a composition stored for 8 weeks at -20°C, 0°C, +20°C, +40°C or +50°C is practically identical.

### Application Example 2

A bleached cotton tricot is dyed at a liquor-to-goods ratio of 10:1 by an exhaust process by introducing the cotton tricot, wetted beforehand in water, into a liquor containing I g/l of the dye of the formula (1) [added in the form of a stock solution prepared with the composition of Example 1, containing 10 g/l of dye of the formula (1)] and 30 g/l of sodium sulphate, raising the dyeing temperature to 80°C at 1°C/minute, after 30 minutes adding 20 g/l of calcined sodium carbonate and a further 30 g/l of sodium sulphate, dyeing at this temperature for 60 minutes, then rinsing, soaping off cold, washing at the boil in a 0.3 % strength solution of a non-ionogenic detergent, and finally drying. An intensely turquoise dyeing is obtained. The dyeing obtained with a composition stored for 8 weeks at -20°C, 0°C, +20°C, +40°C or +50°C is practically identical.

Following the same procedure with the dye of Example 2 gives a black dyeing and with the dye of Example 3 gives a navy dyeing.

### Application Example 3

4 parts of the dye of the formula (2) in the form of the composition of Example 2 are dissolved in 100 parts of water. A cotton poplin fabric is padded with this solution to a pick-up of 75 % by weight, and is then intermediately dried. The intermediately dried fabric is impregnated with 4 % strength sodium carbonate solution to a pick-up of 20 % by weight, using a minimal add-on apparatus, and is then steamed at 100-102°C for 30 seconds. It is then rinsed, soaped off cold, washed at the boil in a 0.3 % strength solution of a non-ionogenic detergent, and finally dried. A black dyeing is obtained. The dyeing obtained with a composition stored for 8 weeks at -20°C, 0°C, +20°C, +40°C or +50°C is practically identical.

Following the same procedure with the dye of Example 1 gives a turquoise dyeing and with the dye of Example 3 gives a navy dyeing.

## Claims

1. Aqueous reactive-dye composition (P) which is an aqueous solution of
(R) at least one reactive dye
and optionally
(F) at least one formulating additive,
**characterized by** a content of
(B) biuret.

2. Aqueous reactive-dye composition (P) according to Claim 1, containing as (F) one or more of the following components:
(F1) urea
(F2) at least one non-ionogenic, basic or cationic solubilizer other than urea,
(F3) at least one alkali metal salt of a mineral acid,
(F4) a surfactant system,
(F5) a defoamer
and (F6) a means of combating the harmful effect of microorganisms.

3. Aqueous reactive-dye composition (P) according to Claim 2, containing as (F) one or more of the components (F1), (F5) and (F6).

4. Aqueous reactive-dye composition (P) according to any one of Claims 1 to 3, containing from 5 to 50 % by weight of (R).

5. Process for the production of a composition (P) according to any one of Claims 1 to 4, **characterized in that** a dye (R) or a dye mixture (R) is mixed in the presence of water with (B) and optionally (F).

6. Use of the compositions (P) according to any one of Claims 1 to 4 for dyeing substrates dyeable with reactive dyes.

7. Use according to Claim 6 for printing.

8. Printing paste prepared with a composition (P) according to one of Claims I to 4 and a thickener and optionally an additive for adjusting the pH to a value within the range from 4 to 7.

9. Stock solution produced by diluting a concentrated composition (P) according to any one of Claims I to 4 with water and, if desired, adjusting the pH to a value within the range from 4 to 7, and having an (R) content in the range from I to 10 % by weight.

10. Use according to Claim 6 using a stock solution according to Claim 9.

11. Use according to Claim 7, using a printing paste according to Claim 8.

## Patentansprüche

1. Wäßriges Reaktivfarbstoffpräparat (P) welches eine wäßrige Lösung von
(R) mindestens einem Reaktivfarbstoff
und gegebenenfalls
(F) mindestens einem Formulierungszusatz
ist,
**gekennzeichnet durch** einen Gehalt an
(B) Biuret.

2. Wäßriges Reaktivfarbstoffpräparat (P) gemäß Anspruch 1, enthaltend als (F) eine oder mehrere der folgenden Komponenten
(F1) Harnstoff,
(F2) mindestens einen von Harnstoff verschiedenen nicht-ionogenen, basischen oder kationischen Lösungsvermittler,
(F3) mindestens ein Alkalimetallsalz einer Mineralsäure,
(F4) ein Tensidsystem,
(F5) einen Entschäumer
und (F6) ein Mittel zur Bekämpfung der schädigenden Wirkung von Mikroorganismen.

3. Wäßriges Reaktivfarbstoffpräparat (P) gemäß Anspruch 2, enthaltend als (F) eine oder mehrere der Komponenten (F1), (F5) und (F6).

4. Wäßriges Reaktivfarbstoffpräparat (P) gemäß einem der Ansprüche 1 bis 3, enthaltend 5 bis 50 Gew.-% (R).

5. Verfahren zur Herstellung eines Präparates (P) gemäß einem der Ansprüche 1 bis 4, **dadurch gekennzeichnet, daß** man einen Farbstoff (R) oder ein Farbstoffgemisch (R) in Gegenwart von Wasser mit (B) und gegebenenfalls (F) mischt.

6. Verwendung der Präparate (P) gemäß einem der Ansprüche 1 bis 4 zum Färben von mit Reaktivfarbstoffen färbbaren Substraten.

7. Verwendung nach Anspruch 6 zum Bedrucken.

8. Druckpaste, hergestellt mit einem Präparat (P) gemäß einem der Ansprüche 1 bis 4 und einem Verdickungsmittel, sowie gegebenenfalls einem Zusatz zur pH-Einstellung auf einen Wert im Bereich von 4 bis 7.

9. Stammlösung, hergestellt durch Verdünnen eines konzentrierteren Präparates (P) gemäß einem der Ansprüche 1 bis 4 mit Wasser und gegebenenfalls Einstellen des pH-Wertes auf einen Wert im Bereich von 4 bis 7, und mit einem (R)-Gehalt im Bereich von 1 bis 10 Gew.-%.

10. Verwendung nach Anspruch 6 unter Verwendung einer Stammlösung gemäß Anspruch 9.

11. Verwendung nach Anspruch 7 unter Verwendung einer Druckpaste gemäß Anspruch 8.

## Revendications

1. Composition aqueuse (P) de colorant réactif qui est une solution aqueuse de
(R) au moins un colorant réactif
et éventuellement de
(F) au moins un additif de formulation,
**caractérisée par** une teneur en
(B) biuret.

2. Composition aqueuse (P) de colorant réactif selon la revendication 1, contenant en tant que (F) un ou plusieurs des composants suivants:
(F1) l'urée,
(F2) au moins un agent de solubilisation basique ou cationique, non ionogène, autre que l'urée,
(F3) au moins un sel de métal alcalin d'un acide minéral,
(F4) un système tensio-actif,
(F5) un agent anti-mousse
et (F6) un agent pour combattre l'effet nocif des micro-organismes.

3. Composition aqueuse (P) de colorant réactif selon la revendication 2, contenant en tant que (F) un ou plusieurs des composants (F1), (F5) et (F6).

4. Composition aqueuse (P) de colorant réactif selon l'une quelconque des revendications 1 à 3, contenant de 5 à 50% en poids de (R).

5. Procédé pour la production d'une composition (P) selon l'une quelconque des revendications 1 à 4, **caractérisé en ce qu'**on mélange un colorant (R) ou un mélange de colorants (R) en présence d'eau avec (B) et éventuellement (F).

6. Utilisation de la composition (P) selon l'une quelconque des revendications 1 à 4 pour la teinture des substrats susceptibles d'être teints avec des colorants réactifs.

7. Utilisation selon la revendication 6 pour l'impression.

8. Pâte d'impression préparée avec une composition (P) selon l'une des revendications 1 à 4 et un épaississant et éventuellement un additif pour ajuster le pH à une valeur comprise dans le domaine de 4 à 7.

9. Solution mère produite en diluant une composition (P) concentrée selon l'une quelconque des revendications 1 à 4 avec de l'eau et, si désiré, en ajustant le pH à une valeur comprise dans le domaine de 4 à 7, et ayant une teneur en (R) comprise dans l'intervalle de 1 à 10% en poids.

10. Utilisation selon la revendication 6, mettant en jeu une solution mère selon la revendication 9.

11. Utilisation selon la revendication 7, mettant en jeu une pâte d'impression selon la revendication 8.
